# FASCICULE DE BREVET EUROPEEN

(11) **EP 2 724 322 B1**
(45) Date de publication et mention de la délivrance du brevet: **31.10.2018**
(21) Numéro de dépôt: 12731591.9
(22) Date de dépôt: 21.06.2012
(51) Int. Cl.: G07D 7/128, H04M 1/725, G07D 7/207, G07D 7/20

(54) **PROCÉDÉ ET DISPOSITIF D'AUTHENTIFICATION D'ÉTIQUETTE**
VERFAHREN UND VORRICHTUNG ZUM AUTHENTIFIZIEREN VON ETIKETTEN
METHOD AND APPARATUS OF AUTHENTICATING A LABEL

(30) Priorité: 21.06.2011 FR 1155470; 21.06.2011 FR 1155472
(43) Date de publication de la demande: 30.04.2014
(73) Titulaire: Advanced Track & Trace, 92500 Rueil-Malmaison Cedex (FR)
(72) Inventeur: MASSICOT, Jean-Pierre, F-92500 Rueil-Malmaison (FR); SAGAN, Zbigniew, F-92500 Rueil-Malmaison (FR); FOUCOU, Alain, F-92500 Rueil-Malmaison (FR)
(74) Mandataire: Cornuejols, Georges
(86) Numéro de dépôt international: PCT/FR2012/051413
(87) Numéro de publication internationale: WO 2012/175878

(56) Documents cités:
- EP-A1- 1 986 162
- EP-A2- 1 014 318
- WO-A2-2004/081649
- WO-A2-2005/029390
- US-A1- 2007 091 376

## Description

La présente invention concerne un procédé d'aide à l'authentification d'une étiquette et un dispositif d'aide à l'authentification d'une étiquette.

Les étiquettes destinées à identifier les produits, par exemple porteuses d'un code à barres, permettent d'identifier un type de produit mais pas de l'authentifier, c'est-à-dire de vérifier qu'il ne s'agit pas d'une copie, en particulier parce que ces étiquettes sont faciles à dupliquer.

On connaît les procédés et dispositifs d'authentifications décrits dans les documents WO 2004/081649, US 2007/091376 et EP 1 986 162. Dans chacun de ces procédés et dispositifs d'importantes ressources de calcul et de débit de données sont mis en oeuvre. De plus, ces procédés et dispositifs ne permettent pas une authentification visuelle par l'utilisateur. Au contraire, l'authentification y est effectuée automatiquement. Elle est donc sujette aux erreurs d'algorithme ou à l'adaptation, par un contrefacteur, aux algorithmes mis en oeuvre.

La présente invention vise à remédier à ces inconvénients.

A cet effet, selon un premier aspect, la présente invention vise un procédé d'aide à l'authentification d'une étiquette tel que défini par les termes de la revendication 1.

Grâce à ces dispositions, l'utilisateur du terminal mobile communicant peut vérifier, par lui-même, un premier niveau d'authentification de l'étiquette en vérifiant que l'image transmise et l'image captée se superposent suffisamment.

Dans des modes de réalisation, au cours de l'étape d'affichage, on réalise une superposition automatique des images pour minimiser une différence entre lesdites images.

Grâce à ces dispositions, l'utilisateur n'a pas à faire d'effort pour que la superposition permette d'estimer l'authenticité de l'étiquette.

Dans des modes de réalisation, au cours de l'étape d'affichage, on met les deux images à superposer à la même échelle et selon la même orientation, en repérant des points caractéristiques de l'étiquette sur les deux images et en superposant ces éléments caractéristiques.

Dans des modes de réalisation, au cours de l'étape d'affichage, on effectue une déformation de l'une des images pour tenir compte de la différence de point de vue.

Dans des modes de réalisation, au cours de l'étape d'affichage, on effectue la translation de l'une des images par rapport à l'autre pour que la superposition automatique minimise une différence entre les images, point par point.

Dans des modes de réalisation, au cours de l'étape de transmission de l'identifiant, le terminal mobile transmet au moins une partie de ladite image captée, le serveur déterminant ledit identifiant à partir de l'image transmise par le terminal mobile.

Grâce à ces dispositions, d'une part le terminal mobile communicant n'a pas besoin de mobiliser d'importantes ressources de traitement d'image et, d'autre part, l'algorithme de détermination de l'identifiant reste protégé sur le serveur distant.

Dans des modes de réalisation, au cours de l'étape de transmission de l'identifiant, le terminal mobile détermine l'identifiant par traitement d'au moins une partie de ladite image captée et transmet des symboles représentatifs de l'identifiant ainsi déterminé.

Grâce à ces dispositions, la quantité de données à transmettre, depuis le terminal mobile communicant vers le serveur distant, est réduite à l'identifiant.

Dans des modes de réalisation, au cours de l'étape de capture, par un terminal mobile communicant, d'une image d'au moins une partie d'une étiquette et au cours de l'étape de transmission de cet identifiant à un serveur, ledit identifiant est constitué d'une partie de l'image captée.

Dans des modes de réalisation, au cours de l'étape de lecture, dans une mémoire d'images d'étiquettes, de l'image d'une étiquette portant ledit identifiant, on réalise une superposition automatique d'au moins une partie des images pour minimiser une différence entre lesdites images, l'image d'une étiquette portant ledit identifiant étant l'image pour laquelle ladite différence est minimale.

Dans des modes de réalisation, au cours de l'étape de lecture, on met les deux parties d'images à superposer à la même échelle et selon la même orientation, en repérant des points caractéristiques de l'étiquette sur les deux images et en superposant ces éléments caractéristiques et on effectue une déformation de l'une des parties d'images pour tenir compte de la différence de point de vue pour que la superposition automatique minimise une différence entre les images, point par point.

Selon des caractéristiques particulières, au cours de l'étape d'affichage, on affiche au moins une partie de l'image transmise en superposition de l'image captée au cours de l'étape de capture.

Grâce à ces dispositions, l'utilisateur n'a pas besoin de capter d'autre image de l'étiquette.

Selon des caractéristiques particulières, au cours de l'étape d'affichage, on affiche au moins une partie de l'image transmise en superposition d'une image captée après l'étape de transmission d'au moins une partie d'image.

Grâce à ces dispositions, l'utilisateur peut ajuster la prise d'image après la réception de l'image lue en mémoire, pour que l'image affichée en superposition avec l'image lue en mémoire soit la plus similaire à cette image lue en mémoire.

Selon un deuxième aspect, la présente invention vise un dispositif d'aide à l'authentification d'une étiquette tel que défini par les termes de la revendication 7.

Dans des modes de réalisation, le moyen d'affichage est adapté à réaliser une superposition automatique des images pour minimiser une différence entre lesdites images.

Dans des modes de réalisation, le moyen d'affichage est adapté à repérer des points caractéristiques de l'étiquette sur les deux images, à superposer ces éléments caractéristiques et à mettre les deux images à superposer à la même échelle et selon la même orientation.

Dans des modes de réalisation, le moyen d'affichage est adapté à effectuer une déformation de l'une des images pour tenir compte de la différence de point de vue.

Dans des modes de réalisation, le moyen d'affichage est adapté à effectuer la translation de l'une des images par rapport à l'autre pour que la superposition automatique minimise une différence entre les images, point par point.

Les avantages, buts et caractéristiques particulières de ce dispositif étant similaires à ceux du procédé objet de la présente invention, ils ne sont pas rappelés ici.

D'autres avantages, buts et caractéristiques particulières de la présente invention ressortiront de la description qui va suivre faite, dans un but explicatif et nullement limitatif, en regard des dessins annexés, dans lesquels :
- la figure 1 représente une première étiquette formée conformément à un procédé de fabrication qui ne fait pas partie de l'invention,
- les figures 2 à 4 représentent d'autres étiquettes formées conformément à un procédé de fabrication qui ne fait pas partie de l'invention,
- les figures 5 à 6 représentent des détails d'étiquettes formées conformément à un mode de réalisation particulier d'un procédé de fabrication qui ne fait pas partie de l'invention,
- les figures 7 et 8 représentent, sous forme de logigramme, des étapes mises en oeuvre dans un mode de réalisation particulier du procédé de fabrication d'étiquettes objet de la présente invention,
- la figure 9 représente, sous forme de logigramme, des étapes mises en oeuvre dans un mode de réalisation particulier du procédé d'authentification d'une étiquette objet de la présente invention,
- la figure 10 représente, sous forme d'un logigramme, des étapes mises en oeuvre dans un mode de réalisation particulier d'un procédé de fabrication d'étiquettes qui ne fait pas partie de l'invention et
- la figure 11 représente des moyens mis en oeuvre pour utiliser le procédé objet de la présente invention.

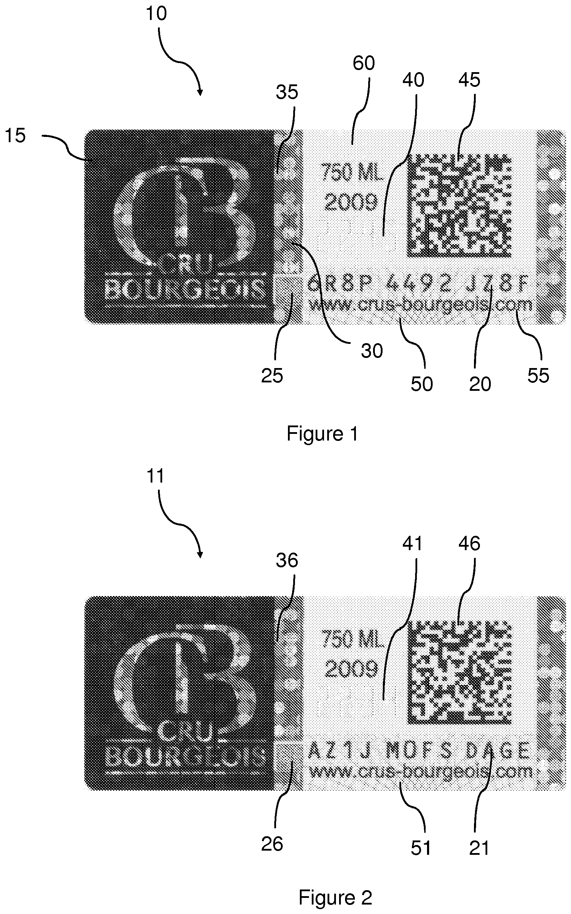

On observe, en figure 1, une étiquette 10 objet de l'invention et portant, sur sa face non destinée à être accolée à un produit (non représenté) à authentifier, une zone 15 d'identification visuelle d'un produit, une séquence 20 de symboles alphanumériques lisibles à l'oeil nu, une marque anti-copie visible à l'oeil nu 25, une micro-écriture de caractères alphanumériques 30, une zone d'hologramme ou d'éléments diffractants nus 35, une marque anti-copie invisible à l'oeil nu 40, un code à barres en deux dimensions 45, une indication de source d'information 50 sur le produit et des motifs géométriques 55.

Le produit à authentifier est de type quelconque. Dans le mode de réalisation représenté en figure 1, l'identification visuelle du produit présente dans la zone 15 représente un « Cru Bourgeois », c'est-à-dire une bouteille de vin, une année représentant un cru, ici 2009 et une contenance, ici 750 ml. Ces indications sont imprimées. L'étiquette 10 est adaptée à être collée sur le contenant ou l'emballage du produit de manière à ce que son décollage sans produit chimique provoque une détérioration visible de l'étiquette 10.

L'ensemble de l'étiquette 10 porte des hologrammes ou des éléments diffractants 35, ici circulaires, recouverts, partiellement, par les marques 15, 20, 25, 30, 40, 45, 50 et 55. En particulier, un fond blanc 60, masquant les hologrammes ou les éléments diffractants, est intercalé entre ces hologrammes ou les éléments diffractants et les marques imprimées 20, 25, 40, 45, 50 et 55.

La séquence 20 de symboles alphanumériques représente, par codage, d'une part, une information variable d'une étiquette à une autre, préférentiellement unique pour chaque étiquette et un identifiant de l'outillage de fabrication de l'étiquette 10. L'homme du métier peut mettre en oeuvre différents types de générateurs de nombres différents et différents types de codages réversibles pour obtenir cette séquence de symboles 20. Ces types de générateurs et de codages ne sont donc pas détaillés ici.

La marque anti-copie visible à l'oeil nu 25 est une marque comportant des détails qui sont dégradés en cas de copie et dont la dégradation est mesurable. Par exemple, la mesure de la dégradation est effectuée par comparaison de l'image de la marque anti-copie avec une image de la marque originale. Selon un autre exemple, la marque anti-copie 25 représente une séquence de symboles munis d'un code de correction d'erreurs (« CRC ») et le dénombrement du nombre de correction d'erreurs à réaliser donne une mesure, ou score, qui, par comparaison avec une valeur limite, indique si la marque anti-copie est une marque originale ou une copie.

La micro-écriture de caractères alphanumériques 30 représente un message lisible avec un instrument optique. La dégradation de la micro-écriture permet, avec cet instrument optique, d'évaluer à l'oeil si l'étiquette est une étiquette originale ou une copie. Dans des modes de réalisation la séquence de symboles 20 est reproduite, éventuellement dupliquée, dans la micro-écriture 30.

Les hologrammes ou les éléments diffractants nus 35 représentent préférentiellement la même forme géométrique, ici des disques. Un point caractéristique de cette forme géométrique, ici son centre, représente, avec les points identiques des autres hologrammes ou des éléments diffractants 35, une dispersion de points presque alignés. Les décalages successifs des points caractéristiques par rapport à une ligne droite, respectivement verticale ou horizontale, fournissent une signature permettant d'identifier l'étiquette 10 ou un lot d'étiquettes 10.

La marque anti-copie invisible à l'oeil nu 40 est une dispersion de points faiblement contrastés avec le fond, chaque point étant écarté des autres points de cette dispersion. Préférentiellement :
- les centres de points sont décalés entre eux, d'une valeur qui, n'est pas un multiple des dimensions de ces points mais un multiple d'une fraction des dimensions de ces points,
- les valeurs des différences des dimensions verticales et horizontales de ces points ne sont pas un multiple de la plus petite de ces dimensions mais un multiple d'une fraction de cette plus petite dimension et/ou
- les valeurs des différences entre les dimensions verticales et/ou horizontales de ces points ne sont pas un multiple de la dimension minimale de ces points, respectivement verticale ou horizontale mais un multiple d'une fraction de la dimension minimale.

Les fractions considérées ici sont ½, 1/3, 1/4 ou 1/5. Préférentiellement, les multiples de ces fractions sont uniformément présents dans la marque 40.

Le code à barres en deux dimensions 45 porte une information d'identification générique ou unitaire du produit. Par exemple le code à barres 45 est un Data Matrix (marque déposée).

L'indication de source d'information 50 permet à un utilisateur ou consommateur du produit de se renseigner sur ce produit. Dans le mode de réalisation représenté, l'indication 50 est une adresse électronique d'une page d'un site de la toile (www.crus-bougeois.com)

Les motifs géométriques 55 sont constitués de points répartis le long de lignes géométriques. La position des motifs géométriques est variable entre différentes étiquettes 10 à 14. A cet effet, lors de la fabrication des étiquettes, on met préférentiellement en oeuvre des cylindres de découpe et d'impression ayant des nombres de poses différentes. Par exemple, avec 114 poses sur le cylindre de découpe et 144 poses sur le cylindre d'impression, on génère un nombre de positions différentes égal au plus petit commun multiple de ces nombres, soit environ 2700 positions différentes.

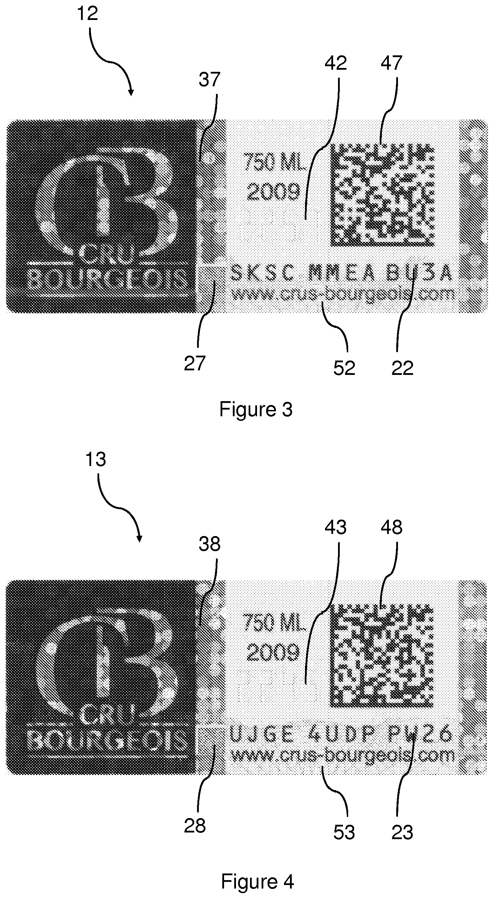

Préférentiellement, les contenus de la séquence 20 de symboles alphanumériques lisibles à l'oeil nu, de la marque anti-copie visible à l'oeil nu 25, de la marque anti-copie invisible à l'oeil nu 40 et du code à barres en deux dimensions 45 sont synchronisés, c'est-à-dire sont représentatifs d'au moins une information commune. On observe, dans les figures 1 à 4, que chacun de ces éléments de protection varie.

Ainsi, la génération d'une fausse séquence, d'une fausse marque anti-copie et/ou d'un faux code à barres est détectable par simple recherche (lecture et décodage) de cette information commune.

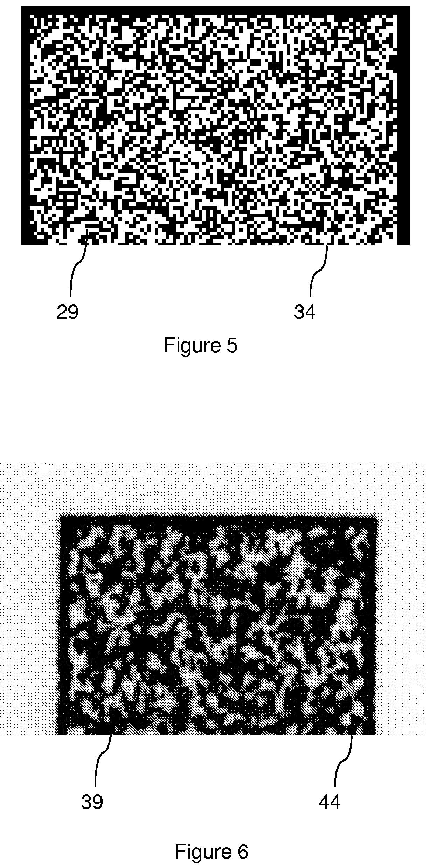

On observe, en figures 5 et 6, une marque anti-copie visible à l'oeil nu 29 (respectivement 39) coupée, lors de la découpe de l'étiquette. Le trait de coupe 34 (respectivement 44) coupe au moins une ligne de la marque anticopie. Dans la figure 5, ce trait de coupe ne coupe qu'une ligne alors qu'en figure 6, plusieurs lignes sont coupées parce que le trait de coupe 44 n'est pas parallèle aux lignes de la marque anticopie 39.

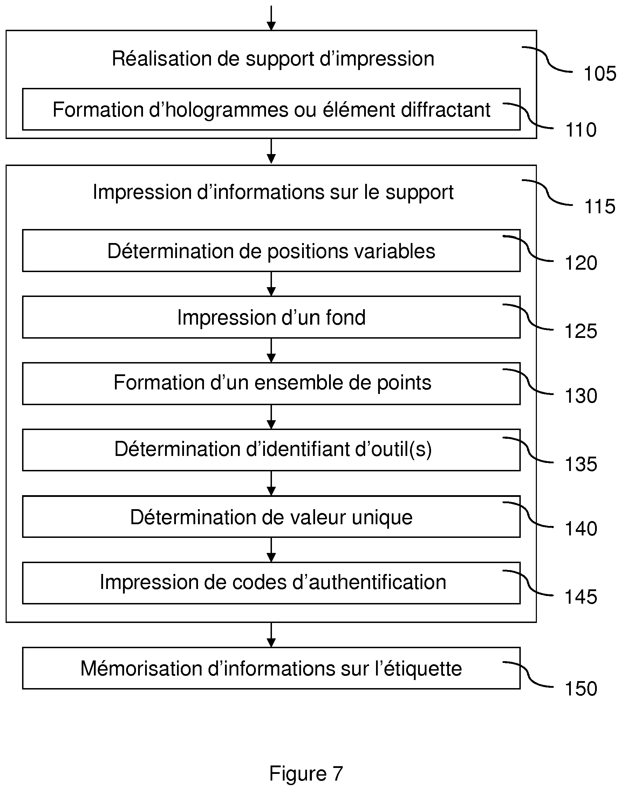

Comme on l'observe en figure 7, dans un mode de réalisation particulier du procédé de fabrication d'étiquettes objet de la présente invention, au cours d'une étape 105, on réalise un support d'impression, au cours d'une étape 115, on réalise une étape d'impression d'informations sur ledit support et, au cours d'une étape 150, on mémorise des informations représentatives de l'étiquette.

L'étiquette 10 est adaptée à être collée sur le contenant ou l'emballage du produit de manière à ce que son décollage sans produit chimique provoque une détérioration visible de l'étiquette 10. A cet effet, le support d'impression prend, initialement, la forme d'une bande de matière plastique encollée dont la colle est protégée par un film adapté à être aisément séparé de la colle. Alternativement, l'encollage et la protection de la colle sont réalisés après fabrication d'une bande d'étiquette, avant leur découpe.

L'étape 105 comporte une étape 110 de formation d'au moins un hologramme sur chaque dite étiquette. Préférentiellement, chaque hologramme ou élément diffractant est formé séparément d'au moins un autre hologramme ou élément diffractant et, plus préférentiellement, d'une pluralité d'autres hologramme ou élément diffractant, voir de tous les autres hologrammes ou éléments diffractants.

L'étape 115 comporte, une étape 120, au cours de laquelle on effectue la détermination, pour différents groupes d'étiquettes, de différentes positions. Préférentiellement, au cours de l'étape 120 de détermination de positions, on met en oeuvre au moins deux cylindres de fabrication dont la circonférence représente deux nombres différents d'étiquettes, l'un desdits cylindres étant adapté à découper des étiquettes et un autre desdits cylindres étant adapté à former lesdits ensembles de points.

L'ensemble de l'étiquette 10 porte alors les hologrammes ou éléments diffractants 35 recouverts, partiellement, par les marques 15, 20, 25, 30, 40, 45, 50 et 55. En particulier, un fond blanc 60, masquant les hologrammes ou les éléments diffractants, est intercalé entre ces hologrammes ou les éléments diffractants et les marques imprimées 20, 25, 40, 45, 50 et 55 avant l'étape 125.

Puis, pour chacun des différents groupes d'étiquettes, on effectue :
- une étape 125 d'impression d'un fond à imprimer, ici un fond blanc et
- une étape 130 de formation d'un ensemble de points 55 disposés sur des lignes entrelacées, lesdites lignes ayant des positions fonction de la position déterminée au cours de l'étape de détermination de position.

Les motifs géométriques 55 sont constitués de points répartis le long de lignes géométriques. La position des motifs géométriques est variable entre différentes étiquettes. Préférentiellement, on met en oeuvre des cylindres de découpe et d'impression ayant des nombres de poses différentes. Par exemple, avec 114 poses sur le cylindre de découpe et 130 poses sur le cylindre d'impression, on génère un nombre de positions différentes égal au plus petit commun multiple de ces nombres, soit 7410 positions différentes.

Au cours d'une étape 135, on détermine au moins un identifiant d'au moins un outil de fabrication des étiquettes. Au cours d'une étape 140, on détermine une valeur unique pour l'étiquette et, par codage de cette valeur unique et de l'identifiant d'au moins un outil de fabrication, les valeurs de la séquence 20, de la marque 25, des caractères 30, de la marque 40 et du code à barres en deux dimensions 45. En particulier, la séquence 20 de symboles alphanumériques représente ainsi, par codage, d'une part, une information variable d'une étiquette à une autre, préférentiellement unique pour chaque étiquette et un identifiant de l'outillage de fabrication de l'étiquette 10. Les valeurs des autres éléments d'identification, 25, 30, 40 et 45 peuvent ne pas dépendre de l'identifiant d'outil de fabrication.

Au cours d'une étape 145, on imprime, pour chaque étiquette objet de l'invention, sur sa face non destinée à être accolée à un produit à authentifier, la zone 15 d'identification visuelle d'un produit, l'indication de source d'information 50 sur le produit et les codes d'authentification de l'étiquette. Les codes d'authentification comportent la séquence 20 de symboles alphanumériques lisibles à l'oeil nu, la marque anti-copie visible à l'oeil nu 25, la micro-écriture de caractères alphanumériques 30, la marque anti-copie invisible à l'oeil nu 40, le code à barres en deux dimensions 45.

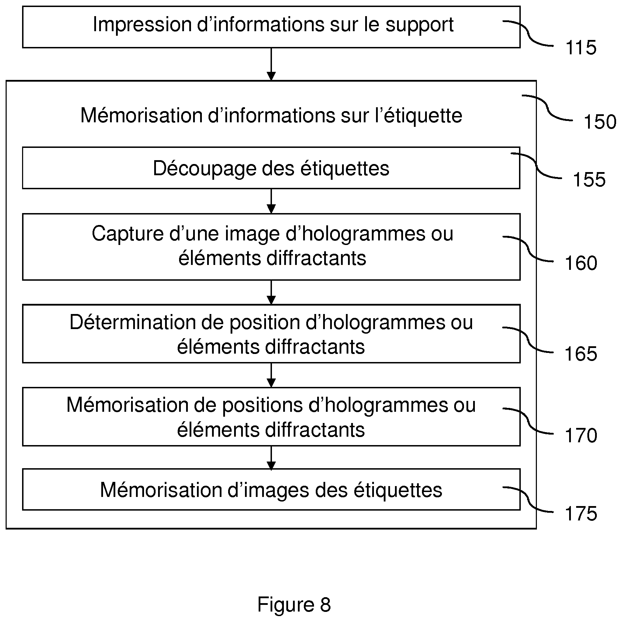

Au cours de l'étape 150 (figure 8), on réalise, pour chaque étiquette :
- une étape 155 de découpage de l'étiquette,
- une étape 160 de capture d'une image d'une pluralité d'hologrammes ou d'éléments diffractants portés par ladite étiquette, par exemple avec une caméra linéaire,
- une étape 165 de détermination de position d'un élément caractéristique d'une pluralité d'hologrammes ou d'éléments diffractants portés par ladite étiquette et
- une étape 170 de mémorisation d'une information représentative des positions respectives des éléments caractéristiques des hologrammes ou des éléments diffractants.

Dans des modes de réalisation, au cours de l'étape 160, l'élément caractéristique de chaque hologramme ou élément diffractant est le centre de gravité de sa surface et, dans le cas où chaque hologramme ou élément diffractant prend la forme d'un disque, le centre de ce disque.

Au cours d'une étape 175, on mémorise les images des étiquettes dans une base de données.

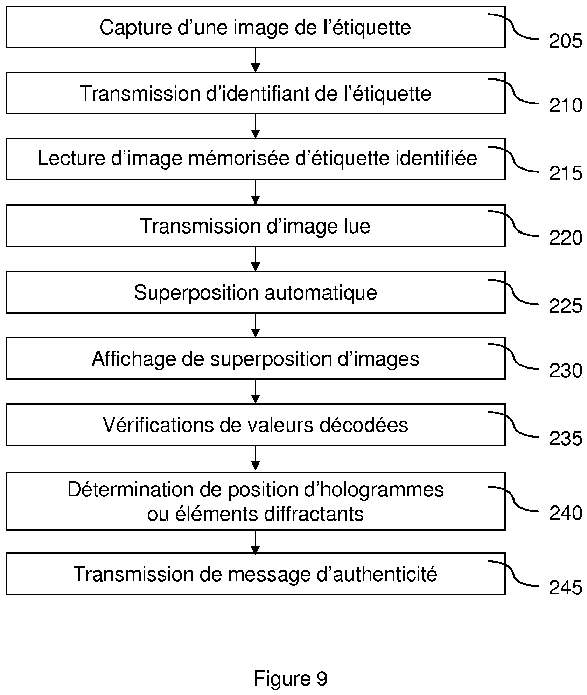

Comme illustré en figure 9, dans un mode de réalisation particulier, pour l'authentification d'une étiquette objet de la présente invention, on réalise, d'abord, une étape 205 de capture, par un terminal mobile communicant, d'une image d'au moins une partie d'une étiquette comportant au moins une partie d'un identifiant.

Au cours d'une étape 210, le terminal mobile communicant effectue la transmission de cet identifiant à un serveur distant, par exemple par l'intermédiaire d'un réseau de téléphonie mobile.

Dans des modes de réalisation, au cours de l'étape 210 de transmission de l'identifiant, le terminal mobile transmet au moins une partie de ladite image captée, le serveur déterminant l'identifiant à partir de l'image transmise par le terminal mobile, par exemple en mettant en oeuvre une reconnaissance optique de caractères (connue sous le nom d'OCR pour Optical Character Récognition). Dans d'autres modes de réalisation, c'est le terminal mobile communicant qui réalise la détermination de la valeur de l'identifiant par traitement d'au moins une partie de ladite image captée et transmet des symboles représentatifs de l'identifiant ainsi déterminé.

Au cours d'une étape 215, le serveur effectue la lecture, dans une mémoire d'images d'étiquettes, de l'image d'une étiquette portant ledit identifiant.

Au cours d'une étape 220, le serveur effectue la transmission au terminal mobile communicant, d'au moins une partie de l'image lue en mémoire.

Au cours d'une étape 230, le terminal mobile communicant effectue l'affichage d'au moins une partie de l'image transmise en superposition d'une image captée par ledit terminal.

Dans des modes de réalisation, au cours de l'étape d'affichage 230, on affiche au moins une partie de l'image transmise en superposition de l'image captée au cours de l'étape de capture. Dans des modes de réalisation, au cours de l'étape d'affichage 230, on affiche au moins une partie de l'image transmise en superposition d'une image captée après l'étape de transmission d'au moins une partie d'image. Dans des modes de réalisation, au cours de l'étape d'affichage 230, au moins une des images superposée est une image fantôme, l'image résultant de la superposition d'images ayant, en chacun de ces points, une valeur dépendant, de la valeur des points correspondants de chacune des images superposées.

Dans des modes de réalisation, soit au niveau du serveur, lorsque, au cours de l'étape 210, l'image a été transmise, soit au niveau du terminal mobile communicant, on réalise, au cours d'une étape 225, une superposition automatique des images.

Par exemple, on met les deux images à la même échelle et selon la même orientation, en repérant des points caractéristiques de l'étiquette sur les deux images et en les superposant. Eventuellement, on effectue une déformation de l'une des images pour tenir compte de la différence de point de vue, notamment au cas où l'étiquette n'est pas plane une fois posée.

Puis, on effectue la translation de l'une des images par rapport à l'autre pour que la superposition automatique minimise une différence entre les images, point par point. Ainsi, les différences résiduelles apparaissent nettement à l'utilisateur du terminal mobile communicant et cet utilisateur peut rapidement se faire une opinion sur l'authenticité du produit portant l'étiquette.

Ainsi, grâce à la base de données d'images d'étiquettes, dans une phase de contrôle par un utilisateur avec un simple téléphone mobile qui envoie une image de l'étiquette, le serveur peut lire le code à barres en deux dimensions et renvoyer au téléphone l'image complète de l'étiquette, ainsi que le zoom d'une zone comportant une partie de la chaine alphanumérique aléatoire, le détail de l'ensemble de points 55, et le numéro de l'outillage de découpe propre à cette étiquette, soit trois informations visuelles qui correspondent à trois éléments variables entre les différentes étiquettes. Avec ces informations visuelles, l'utilisateur peut directement vérifier que l'étiquette est authentique.

Dans des modes de réalisation, le serveur effectue, sur la base de l'image transmise au cours de l'étape 235, des traitements complémentaires d'images et de codes lus sur cette image, pour déterminer l'authenticité de l'étiquette. En particulier, au cours de l'étape 235, on vérifie, après décodage, que les valeurs de la séquence 20, de la marque 25, des caractères 30, de la marque 40 et du code à barres en deux dimensions 45 se correspondent. De plus, au cours d'une étape 240, on détermine les positions des hologrammes ou des éléments diffractants 35 et on compare leurs distances à des positions régulièrement espacées sur l'étiquette avec les positions mémorisées au cours de l'étape 180. En fonction du résultat de cette comparaison, c'est-à-dire en comparant la somme des distances des positions mémorisées et déterminées sur la base de l'image reçue à une valeur limite prédéterminée, on détermine si l'étiquette est authentique et on envoie un message représentant l'authenticité de l'étiquette au terminal mobile communicant, au cours d'une étape 245.

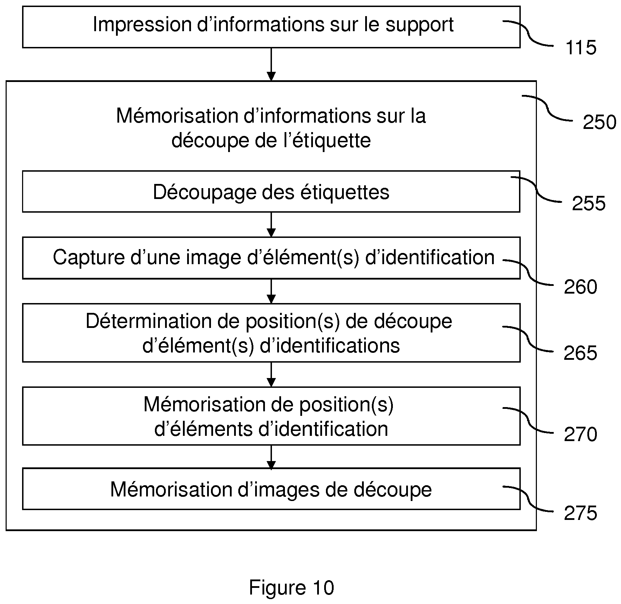

On observe, en figure 10, qu'après l'étape 115 d'impression d'informations sur le support à découper pour former les étiquettes, notamment d'impression de la marque anticopie visible à l'oeil nu, on réalise une étape 250 de mémorisation d'informations relatives à la découpe de l'étiquette.

Au cours de l'étape 250, on réalise, pour chaque étiquette :
- une étape 255 de découpage de l'étiquette au cours de laquelle on coupe au moins un élément d'identification, préférentiellement une marque anticopie,
- une étape 260 de capture d'une image d'au moins une partie coupée d'un élément d'identification portée par ladite étiquette, par exemple avec une caméra linéaire,
- une étape 265 de détermination d'une signature de la coupe de l'étiquette,
- une étape 270 de mémorisation d'une information représentative de la signature de la coupe de l'élément d'identification et
- une étape 275 de mémorisation de l'image de la partie coupée de l'élément d'identification dans une base de données.

Dans des modes de réalisation, au cours de l'étape 265, la signature peut dépendre de la position, l'angle et la forme de la coupe, qui sont soumis à un aléa lié aux tolérances de positionnement, servent à créer une signature difficilement reproductible. Dans des variantes, au cours de l'étape 265, on détermine une différence de position de coupe entre au moins deux parties d'un élément d'identification, par exemple les deux extrémités d'une marque anticopie. Dans des variantes, au cours de l'étape 265, lorsqu'au moins un élément d'identification comporte des lignes successives parallèles, on détermine au moins un nombre de lignes de ladite marque d'identification restant sur l'étiquette après la coupe. Ne nombre de lignes peut être le nombre minimum, à l'une des extrémités de l'élément d'identification, le nombre maximum, à l'autre extrémité ou le nombre moyen entre ces deux nombres.

Dans des variantes, au cours de l'étape 255, on met en oeuvre au moins deux cylindres de fabrication dont la circonférence représente deux nombres différents d'étiquettes, l'un desdits cylindres étant adapté à former au moins un dit élément d'identification et un autre desdits cylindres étant adapté à découper des étiquettes. En prévoyant un déplacement respectif du trait de coupe et des étiquettes, le nombre de positions aléatoires est alors encore multiplié par le plus petit commun multiple des nombres d'étiquettes représentés par les cylindres mis en oeuvre.

On observe que l'ensemble des étapes illustrées en figure 10 s'applique aussi bien à la détermination d'authenticité par un utilisateur sur la base d'un élément d'identification se trouvant entièrement sur l'étiquette que sur la base d'un élément d'identification coupé, ce dernier cas permettant encore mieux à l'utilisateur de l'appareil mobile communicant de déterminer si l'étiquette est authentique.

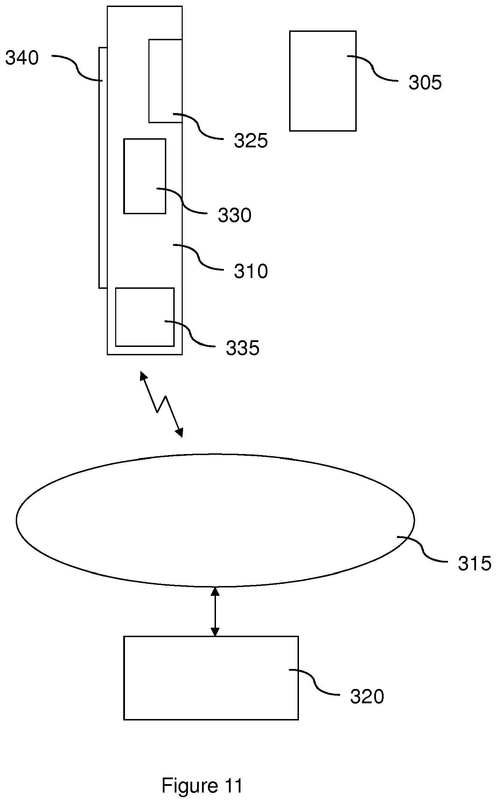

On observe, en figure 11, une étiquette 305, un terminal mobile communicant 310, un réseau informatique 315 et un serveur 320. L'étiquette 305 est telle que présentée dans le reste de la description. Le terminal mobile communicant 310 est utilisé par l'utilisateur qui souhaite authentifier un produit portant l'étiquette 305. Par exemple, le terminal mobile communicant 310 est un téléphone intelligent ou « smartphone ». Le terminal mobile communicant comporte un moyen de prise de vue 325 que l'utilisateur place en regard de l'étiquette 305, un moyen de traitement d'image 330, un émetteur hertzien 335 et un écran d'affichage 340.

Le réseau informatique 315 est, par exemple, une combinaison d'un réseau de télécommunication sans fil et du réseau internet. Le serveur 320 communique avec le terminal mobile communicant 310 par l'intermédiaire du réseau informatique 315.

Le moyen de traitement d'image 330 et le serveur 320 sont configurés pour se partager les étapes des différents aspects du procédé exposés en regard des figures 1 à 10.

Dans des modes de réalisation, le terminal mobile communicant 310 comporte :
- le moyen de capture 325, d'une image d'au moins une partie d'une étiquette comportant au moins une partie d'un identifiant,
- le moyen de transmission 335 de cet identifiant au serveur 320,
- le moyen de réception 335, de la part du serveur 320, d'au moins une partie d'une image lue en mémoire du serveur 320 et correspondant à l'identifiant transmis au serveur 320 et
- le moyen d'affichage, constitué du moyen de traitement d'image 330 et de l'afficheur 340, d'au moins une partie de l'image transmise en superposition d'une image captée par ledit terminal, l'image résultant de la superposition d'images ayant, en chacun de ces points, une valeur dépendant, à la fois de la valeur d'un point de chacune des images superposées.

On note que l'identifiant peut être une partie ou la totalité de l'image captée ou des symboles lus dans l'image captée. On note aussi que la superposition peut se faire avec l'image initialement captée ou avec une image captée après la réception de l'image provenant du serveur 320.

Dans des modes de réalisation, le moyen de traitement d'image 330 et l'écran d'affichage 340, qui constituent alors le moyen d'affichage, sont adaptés à réaliser une superposition automatique des images pour minimiser une différence entre lesdites images.

Dans des modes de réalisation, le moyen de traitement d'image 330 et l'écran d'affichage 340, qui constituent alors le moyen d'affichage, sont adaptés à repérer des points caractéristiques de l'étiquette sur les deux images, à superposer ces éléments caractéristiques et à mettre les deux images à superposer à la même échelle et selon la même orientation.

Dans des modes de réalisation, le moyen de traitement d'image 330 et l'écran d'affichage 340, qui constituent alors le moyen d'affichage, sont adaptés à effectuer une déformation de l'une des images pour tenir compte de la différence de point de vue.

Dans des modes de réalisation, le moyen de traitement d'image 330 et l'écran d'affichage 340, qui constituent alors le moyen d'affichage, sont adaptés à effectuer la translation de l'une des images par rapport à l'autre pour que la superposition automatique minimise une différence entre les images, point par point.

Dans des modes de réalisation, pour la transmission de l'identifiant, le terminal mobile 310 détermine l'identifiant par traitement d'au moins une partie de ladite image captée et transmet des symboles représentatifs de l'identifiant ainsi déterminé. On réduit ainsi le débit de données nécessaire à la communication entre le terminal 310 et le serveur 320.

Dans des modes de réalisation, pour la transmission de l'identifiant, le terminal mobile 310 transmet au moins une partie de ladite image captée, le serveur 320 déterminant ledit identifiant à partir de l'image transmise par le terminal mobile. On réduit ainsi les ressources nécessaires au niveau du terminal 310 et, notamment du moyen de traitement d'image 330.

Dans des modes de réalisation, pour la transmission de l'identifiant, le terminal mobile 310 détermine l'identifiant par traitement d'au moins une partie de ladite image captée et transmet des symboles représentatifs de l'identifiant ainsi déterminé.

Dans des modes de réalisation, pour la transmission de cet identifiant à un serveur, ledit identifiant est constitué d'une partie de l'image captée.

Dans des modes de réalisation, le serveur effectue, au cours de l'étape 215 de lecture, dans une mémoire d'images d'étiquettes, de l'image d'une étiquette portant ledit identifiant, une superposition automatique d'au moins une partie des images pour minimiser une différence entre lesdites images, l'image d'une étiquette portant ledit identifiant étant l'image pour laquelle ladite différence est minimale.

Dans des modes de réalisation, au cours de l'étape 215 de lecture, le serveur met les deux parties d'images à superposer à la même échelle et selon la même orientation, en repérant des points caractéristiques de l'étiquette sur les deux images et en superposant ces éléments caractéristiques et on effectue une déformation de l'une des parties d'images pour tenir compte de la différence de point de vue pour que la superposition automatique minimise une différence entre les images, point par point.

## Revendications

1. Procédé d'aide à l'authentification d'une étiquette, qui comporte :
- une étape (205) de capture, par un terminal mobile communicant, d'une image d'au moins une partie d'une étiquette comportant au moins une partie d'un identifiant et
- une étape (210) de transmission de cet identifiant à un serveur,
- une étape (215) de lecture, dans une mémoire d'images d'étiquettes, de l'image d'une étiquette portant ledit identifiant et
- une étape (220) de transmission, audit terminal mobile communicant, d'au moins une partie de l'image lue en mémoire
**caractérisé en ce qu'**il comporte, en outre :
- une étape (225) de superposition d'images au cours de laquelle :
- on met les deux images à superposer à la même échelle et selon la même orientation, en repérant des points caractéristiques de l'étiquette sur les deux images et
- on superpose ces points caractéristiques en effectuant une déformation de l'une des images pour tenir compte de la différence de point de vue et en effectuant la translation de l'une des images par rapport à l'autre qui minimise, point par point, une différence entre les images superposées ; et
- une étape (230) d'affichage d'au moins une partie de l'image transmise en superposition d'une image captée par ledit terminal, la valeur de chacun des points de l'image résultant de la superposition d'images dépendant, de la valeur des points correspondants de chacune des images superposées.

2. Procédé selon la revendication 1, dans lequel, au cours de l'étape (210) de transmission de l'identifiant, le terminal mobile transmet au moins une partie de ladite image captée, le serveur déterminant ledit identifiant à partir de l'image transmise par le terminal mobile.

3. Procédé selon l'une des revendications 1 ou 2, dans lequel, au cours de l'étape (210) de transmission de l'identifiant, le terminal mobile détermine l'identifiant par traitement d'au moins une partie de ladite image captée et transmet des symboles représentatifs de l'identifiant ainsi déterminé.

4. Procédé selon l'une des revendications 1 à 3, dans lequel :
- au cours de l'étape (205) de capture, par un terminal mobile communicant, d'une image d'au moins une partie d'une étiquette et
- au cours de l'étape (210) de transmission de cet identifiant à un serveur, ledit identifiant est constitué d'une partie de l'image captée.

5. Procédé selon la revendication 4, dans lequel, au cours de l'étape (215) de lecture, dans une mémoire d'images d'étiquettes, de l'image d'une étiquette portant ledit identifiant, on réalise une superposition automatique d'au moins une partie des images pour minimiser une différence entre lesdites images, l'image d'une étiquette portant ledit identifiant étant l'image pour laquelle ladite différence est minimale.

6. Procédé selon la revendication 5, dans lequel, au cours de l'étape (215) de lecture, on met les deux parties d'images à superposer à la même échelle et selon la même orientation, en repérant des points caractéristiques de l'étiquette sur les deux images et en superposant ces éléments caractéristiques et on effectue une déformation de l'une des parties d'images pour tenir compte de la différence de point de vue pour que la superposition automatique minimise une différence entre les images, point par point.

7. Dispositif (310) d'aide à l'authentification d'une étiquette par un terminal mobile communicant, qui comporte :
- un moyen (325) de capture, d'une image d'au moins une partie d'une étiquette comportant au moins une partie d'un identifiant et
- un moyen (335) de transmission de cet identifiant à un serveur (320),
- un moyen (330, 340) d'affichage comportant un moyen de traitement d'image (330) et un écran d'affichage (340),
**caractérisé en ce qu'**il comporte, en outre :
- un moyen (335) de réception, de la part du serveur, d'au moins une partie d'une image lue en mémoire,
- un moyen (330) de traitement d'image configuré pour :
- mettre les deux images à superposer à la même échelle et selon la même orientation, en repérant des points caractéristiques de l'étiquette sur les deux images et
- superposer ces points caractéristiques en effectuant une déformation de l'une des images pour tenir compte de la différence de point de vue et en effectuant la translation de l'une des images par rapport à l'autre qui minimise, point par point, une différence entre les images superposées ; et
- un écran (340) d'affichage d'au moins une partie de l'image transmise en superposition d'une image captée par ledit terminal, la valeur de chacun des points de l'image résultant de la superposition d'images dépendant, de la valeur des points correspondants de chacune des images superposées.

8. Dispositif selon la revendication 7, dans lequel le moyen (335) de transmission de l'identifiant transmet au moins une partie de ladite image captée au serveur (320).

9. Dispositif selon l'une des revendications 7 ou 8, dans lequel le moyen (335) de transmission de l'identifiant détermine l'identifiant par traitement d'au moins une partie de ladite image captée et transmet des symboles représentatifs de l'identifiant ainsi déterminé.

10. Dispositif selon l'une des revendications 7 à 9, dans lequel le moyen (335) de transmission de l'identifiant au serveur (320) transmet un identifiant constitué d'une partie de l'image captée par le moyen (325) de capture d'une image.

## Patentansprüche

1. Verfahren zur Hilfe bei der Authentifizierung eines Etiketts, welches aufweist:
- einen Schritt (205) des Erfassens durch ein kommunizierendes mobiles Endgerät eines Bildes von mindestens einem Abschnitt eines Etiketts, das mindestens einen Abschnitt einer Kennung aufweist, und
- einen Schritt (210) des Übertragens dieser Kennung zu einem Server,
- einen Schritt (215) des Lesens, in einem Speicher von Etikettenbildern, des Bildes eines Etiketts, welches die Kennung trägt, und
- einen Schritt (220) des Übertragens mindestens eines Abschnitts des im Speicher gelesenen Bildes zu dem kommunizierenden mobilen Endgerät,
**dadurch gekennzeichnet, dass** es weiter aufweist:
- einen Schritt (225) des Überlagerns von Bildern, im Laufe dessen:
- man die beiden Bilder in demselben Maßstab und in derselben Ausrichtung überlagert, und dabei die charakteristischen Punkte des Etiketts auf den beiden Bildern markiert, und
- man diese charakteristischen Punkte überlagert, indem man eine Verformung des einen der Bilder vornimmt, um den Unterschied eines Blickpunktes zu berücksichtigen und man die Verschiebung von dem einen der Bilder im Verhältnis zu dem anderen vornimmt, welche Punkt für Punkt einen Unterschied zwischen den überlagerten Bildern minimiert; und
- einen Schritt (230) des Anzeigens von mindestens einem Abschnitt des übertragenen Bildes in Überlagerung eines Bildes, das durch das Endgerät erfasst worden ist, wobei der Wert eines jeden der Punkte des Bildes, der aus der Überlagerung von Bildern hervorgeht von dem Wert der Punkte abhängig ist, die jedem der überlagerten Bilder entsprechen.

2. Verfahren nach Anspruch 1, wobei das mobile Endgerät im Laufe von Schritt (210) des Übertragens der Kennung, mindestens einen Abschnitt des erfassten Bildes überträgt, wobei der Server die Kennung ausgehend von dem von dem mobilen Endgerät übertragenen Bild bestimmt.

3. Verfahren nach einem der Ansprüche 1 oder 2, wobei das mobile Endgerät im Laufe von Schritt (210) des Übertragens der Kennung die Kennung durch Bearbeitung von mindestens einem Abschnitt des erfassten Bildes bestimmt und repräsentative Symbole der so bestimmten Kennung überträgt.

4. Verfahren nach einem der Ansprüche 1 bis 3, wobei:
- im Laufe von Schritt (205) des Erfassens eines Bildes zumindest eines Abschnitts eines Etiketts durch ein kommunizierendes mobiles Endgerät, und
- im Laufe von Schritt (210) des Übertragens dieser Kennung zu einem Server,
die Kennung aus einem Abschnitt des erfassten Bildes gebildet wird.

5. Verfahren nach Anspruch 4, wobei man im Laufe von Schritt (215) des Lesens des Bildes eines Etiketts, das die Kennung trägt, in einem Speicher von Etikettenbildern, eine automatische Überlagerung von mindestens einem Abschnitt der Bilder vornimmt, um einen Unterschied zwischen den Bildern zu minimieren, wobei das Bild eines Etiketts, welches die Kennung trägt, das Bild ist, für das der Unterschied minimal ist.

6. Verfahren nach Anspruch 5, wobei man im Laufe von Schritt (215) des Lesens die beiden zu überlagernden Bildabschnitte in demselben Maßstab und in derselben Ausrichtung überlagert, die charakteristischen Punkte des Etiketts auf den beiden Bildern markiert und man durch Überlagerung dieser charakteristischen Elemente eine Verformung des einen der Bildabschnitte vornimmt, um den Unterschied eines Blickpunktes zu berücksichtigen, damit die automatische Überlagerung einen Unterschied zwischen den Bildern, Punkt für Punkt, minimiert.

7. Vorrichtung (310) zur Hilfe bei der Authentifizierung eines Etiketts durch ein kommunizierendes mobiles Endgerät, die aufweist:
- ein Mittel (325) zum Erfassen eines Bildes mit mindestens einem Abschnitt eines Etiketts, das mindestens einen Abschnitt einer Kennung aufweist, und
- ein Mittel (335) zum Übertragen dieser Kennung zu einem Server (320),
- ein Mittel (330, 340) zum Anzeigen, das ein Bildbearbeitungsmittel (330) und einen Anzeigebildschirm (340) aufweist,
**dadurch gekennzeichnet, dass** sie weiter aufweist:
- ein Mittel (335) zum Empfangen, von dem Server, von mindestens einem Abschnitt eines im Speicher gelesenen Bildes,
- ein Mittel (330) zur Bildbearbeitung, konfiguriert, um:
- die beiden Bilder in demselben Maßstab und in derselben Ausrichtung zu überlagern, und dabei die charakteristischen Punkte des Etiketts auf den beiden Bildern zu markieren,
- diese charakteristischen Punkte zu überlagern, eine Verformung des einen der Bilder vorzunehmen, um den Unterschied eines Blickpunktes zu berücksichtigen und die Verschiebung von dem einen der Bilder im Verhältnis zu dem anderen vorzunehmen, welche Punkt für Punkt einen Unterschied zwischen den überlagerten Bildern minimiert; und
- einen Bildschirm (340) zum Anzeigen mindestens eines Abschnitts des übertragenen überlagerten Bildes eines durch das Endgerät erfassten Bildes, wobei der Wert eines jeden der Punkte des Bildes, der aus der Überlagerung von Bildern hervorgeht von dem Wert der Punkte abhängig ist, die jedem der überlagerten Bilder entsprechen.

8. Vorrichtung nach Anspruch 7, wobei das Mittel (335) zum Übertragen der Kennung mindestens einen Abschnitt des erfassten Bildes zum Server (320) überträgt.

9. Vorrichtung nach einem der Ansprüche 7 oder 8, wobei das Mittel (335) zum Übertragen der Kennung die Kennung durch Bearbeitung von mindestens einem Abschnitt des erfassten Bildes bestimmt und repräsentative Symbole der so bestimmten Kennung überträgt.

10. Vorrichtung nach einem der Ansprüche 7 bis 9, wobei das Mittel (335) zum Übertragen der Kennung zum Server (320) eine Kennung überträgt, die aus einem Abschnitt des erfassten Bildes durch das Mittel (325) zum Erfassen eines Bildes gebildet wurde.

## Claims

1. Tag authentication assistance method, which comprises:
- a step (205) of capturing an image, with a communicating mobile terminal, of at least a portion of a tag comprising at least a portion of an identifier; and
- a step (210) of transmitting said identifier to a server;
- a step (215) of reading, from a memory of tag images, the image of a tag having said identifier; and
- a step (220) of transmitting, to said communicating mobile terminal, at least a portion of the image read from the memory
**characterized in that** it also comprises:
- a step (225) of superimposing images, during which:
- the two images to be superimposed are set to the same scale and orientation, by identifying characteristic points of the tag in the two images; and
- these characteristic points are superimposed by deforming one of the images to take the difference in viewpoint into account and by translating one of the images relative to the other, which minimizes, point by point, a difference between the superimposed images; and
- a step (230) of displaying at least a portion of the transmitted image superimposed on an image captured by said terminal, the value of each of the points of the image resulting from the superimposition of images depending on the value of the corresponding points of each of the superimposed images.

2. Method according to claim 1 wherein, during the identifier transmission step (210), the mobile terminal transmits at least a portion of said captured image, the server determining said identifier from the image transmitted by the mobile terminal.

3. Method according to one of claims 1 or 2 wherein, during the identifier transmission step (210), the mobile terminal determines the identifier by processing at least a portion of said captured image and transmits symbols representative of the identifier thus determined.

4. Method according to one of claims 1 to 3 wherein:
- during the step (205) of capturing an image, with a communicating mobile terminal, of at least a portion of a tag comprising at least a portion of an identifier; and
- during the step (210) of transmitting said identifier to a server,
said identifier is comprised of a portion of the captured image.

5. Method according to claim 4 wherein, during the step (215) of reading the image of a tag having said identifier from a memory of tag images, at least a portion of the images are automatically superimposed so as to minimize a difference between said images, the image of a tag bearing said identifier being the image for which said difference is minimal.

6. Method according to claim 5 wherein, during the reading step (215), the two portions of images to be superimposed are set to the same scale and orientation, by identifying characteristic points of the tag in the two images and superimposing these characteristic elements, and one of the image portions is deformed to take the difference in viewpoint into account so that the automatic superimposition minimizes a difference between the images, point by point.

7. Assistance device (310) for authenticating a tag by a communicating mobile terminal, **characterized in that** it comprises:
- a means (325) for capturing an image of at least a portion of a tag comprising at least a portion of an identifier; and
- a means (335) for transmitting this identifier to a server (320);
- a display means (330, 340) comprising an image processing means (330) and a display screen (340),
**characterized in that** it also comprises:
- a means (335) for the reception by the server of at least a portion of the image read from the memory;
- an image processing means (330) configured to:
- set the two images to be superimposed to the same scale and orientation, by identifying characteristic points of the tag in the two images; and
- superimpose these characteristic points by deforming one of the images to take the difference in viewpoint into account and by translating one of the images relative to the other, which minimizes, point by point, a difference between the superimposed images; and
- a screen (340) for displaying at least a portion of the transmitted image superimposed on an image captured by said terminal, the value of each of the points of the image resulting from the superimposition of images depending on the value of the corresponding points of each of the superimposed images.

8. Device according to claim 7 wherein the identifier transmission means (335) transmits at least a portion of said captured image to the server (320).

9. Device according to one of claims 7 or 8 wherein the identifier transmission means (335) determines the identifier by processing at least a portion of said captured image and transmits symbols representative of the identifier thus determined.

10. Device according to one of claims 7 to 9 wherein the means (335) for transmitting the identifier to the server (320) transmits an identifier comprised of a portion of the image captured by the means (325) for capturing an image.
